# EUROPEAN PATENT APPLICATION

(11) **EP 0 725 279 A1**
(43) Date of publication of application: **07.08.1996**
(21) Application number: 96300648.1
(22) Date of filing: 30.01.1996
(51) Int. Cl.: G01N 35/10

(54) **Improved probe wash device**

(30) Priority: 31.01.1995 US 381051
(71) Applicant: JOHNSON & JOHNSON CLINICAL DIAGNOSTICS, INC., Rochester, New York 14650-0880 (US)
(72) Inventor: Tomasso, David Angelo, Rochester, New York 14626 (US); Hyde, David Donald, Ontario, New York 14519 (US)
(74) Representative: Mercer, Christopher Paul

(57) **Abstract**

A probe wash device (40) for an analyzer (10) comprises a wash compartment (80) and a source of wash fluid (84) and an exhaust for wash fluid (103) both fluidly connected to the compartment. Adjacent to the location of the connection of the source of wash fluid to the compartment, a constricted passageway (112) is provided to force in-drawn air to speed up during drying, thus ensuring complete removal of residual liquid.

## Description

This invention relates to a wash device for a permanent probe, for use in an analyzer, and specifically to improved features that enhance the cleansing provided by the wash device.

It is common practice in analyzers using a wet assay, to transfer at least some of the utilized liquids, for example, the reagents, via a permanent aspirating probe. To avoid contamination, at least some of such permanent probes are washed between uses, in a probe wash device on the analyzer. A wash fluid inlet injects wash liquid into a confining compartment into which the probe is inserted, and an exhaust removes it and air, the latter to dry the probe. See, for example, US-A-4,820,497, wherein the wash fluid is supplied from inside the probe. Most commonly, the wash flows as a sheet around the exterior of the probe.

Several problems exist in prior art probe washes. For one thing, we have discovered that they do not always completely dry the probe after washing, leaving residual drops of liquid on the probe surface. That is, merely sucking some air to flow past the probe while confined in the wash compartment, may provide inadequate drying. These residuals can cause contamination to the extent they contain other reagents, and so forth. Also, the wash flow, if not entrained with air, may not completely or adequately wash off the surface of the probe.

Thus, there has been a need, prior to this invention, to improve upon probe wash devices to overcome these deficiencies.

We have designed a probe wash device that solves the noted problems.

More specifically, there is provided a device used in an analyzer to wash a probe having an outside diameter, the device having a wash compartment of a predetermined inner diameter, a source of wash fluid that is fluidly connected thereto, and two opposite ends, one of the ends having a probe access opening of a selected entrance diameter, and an exhaust adjacent the other end for removing liquid and air from the wash compartment, characterized in that the compartment includes at a location adjacent to the one end, a constricted passageway of a diameter that is less than the probe access entrance diameter and the predetermined inner diameter, but that is greater than the outside diameter of a probe washed in the device, and a wall surface smoothly connecting the probe access entrance diameter with the constricted passageway diameter so that air is speeded up when flowing into the one end and past the constricted passageway to aid in drying a probe that is being withdrawn from the device.

Accordingly, it is an advantageous feature of the invention that a probe wash is provided that more adequately dries the probe to remove all residual liquid.

Another advantageous feature of the invention is that such a probe wash is more effective in scrubbing the exterior surface of a probe being washed.

Other advantageous features will become apparent upon reference to the following "Detailed Description", when read in light of the attached drawings.
Fig. 1 is a partially schematic, fragmentary plan view of an analyzer utilizing the probe wash device of the invention;
Fig. 2 is a partially schematic, isometric view illustrating the functioning of the incubator of the analyzer;
Fig. 3 is an enlarged plan view of just the probe wash device of the invention;
Fig. 4 is an elevational sectional view taken generally along the line IV-IV of Fig. 3;
Fig. 5 is a section view similar to that of Fig. 4 but with a probe in place for washing;
Fig. 6 is a fragmentary section view similar to that of Fig. 4, but showing an alternate embodiment; and
Figs. 7A and 7B are fragmentary section views similar to that of Fig. 6, but of unacceptable comparative examples.

The invention is hereinafter described in connection with the preferred embodiment, in which the wash compartment is a generally straight, vertically-oriented cylinder, and wherein the wash fluid inlets and exhaust have each a preferred shape or configuration. For example, the wash inlet jets are aimed downwardly. In addition, the invention is useful regardless of whether the wash compartment is straight, vertically-oriented, or cylindrical, and regardless of the particular shape or orientation of the wash inlets or exhaust.

Descriptions such as "above", "below", "downward", "vertical", and the like refer to orientations of parts of the invention during their intended use.

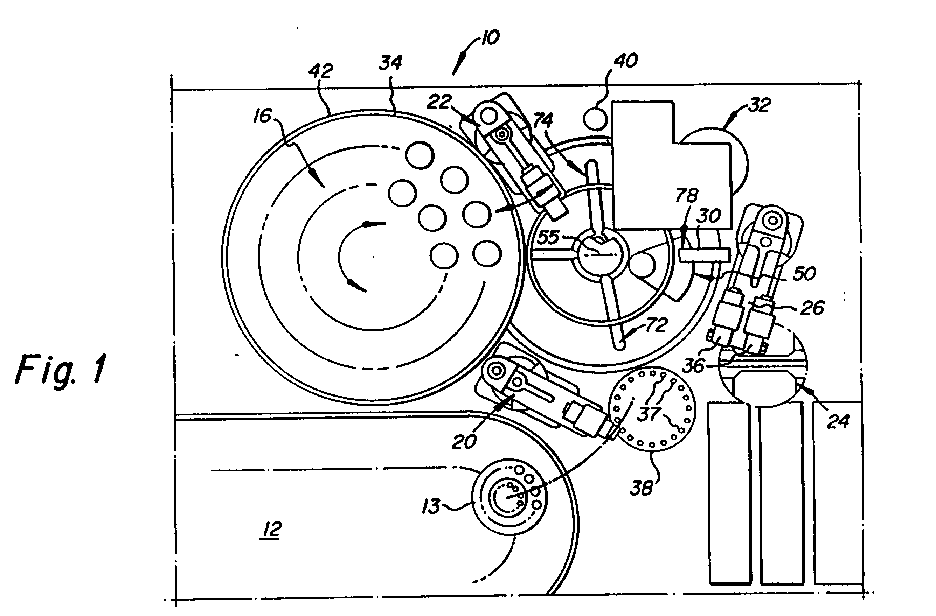

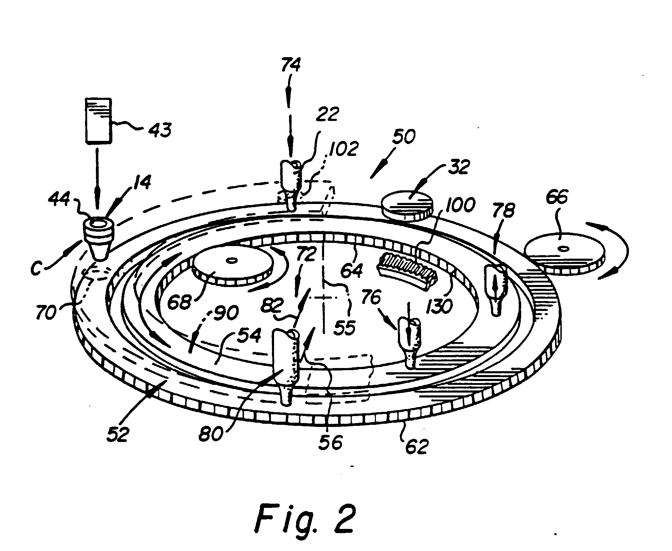

As shown in Fig. 1, an analyzer 10 in which the probe wash device is used, preferably comprises sample supply station 12, a cuvette supply station 14, Fig. 2, a reagent supply station 16, Fig. 1, incubator 50, means 20 and 22 for transferring sample and reagent to a cuvette disposed in an outer ring of incubator 50, signal reagent supply station 24, means 26 for transferring signal reagent to the cuvette in an inner ring of incubator 50, cuvette wash station 30, and luminometer 32, all as described in commonly-owned US-A-5,244,633. Any suitable construction can be used for the sample supply station 12, cuvette supply station 14, reagent supply station 16, transfer means 20, 22 and 26, signal reagent supply station 24, wash dispenser 30, and luminometer 32. Useful sample transfer devices 13 include those described and claimed in US-A-5,366,697. Supply station 16 includes a rotor 34 having an axis of rotation 35. Transfer means 20, 22 and 26 are all preferably pivoting aspirators, the aspirator at transfer means 26 having dual probes 36. Transfer means 20 preferably uses disposable tips, which can be presented for pick-up on supply station 12. Additional tips 37 can be presented on turntable 38 for use by means 20 during a dilution step. On the other hand, the aspirator for transfer means 22 preferably uses a more permanent dispensing tip, which uses a probe wash device 40, described hereinafter in detail.

Cuvettes are provided for dispensing at station 14 by mounting them, preferably, in the reagent module 100 discussed below, shown in phantom Fig. 1.

Although any cuvette can be used, preferably it is a cup-like container "C", having on its inside wall surface 44, an antibody pre-attached to the wall surface, Fig. 2. The antibody is useful in a conventional sandwich assay which produces a complex of antibody-antigen labeled antibody for generating a chemiluminescent signal.

The incubator is preferably that disclosed in said '633 patent, and comprises two rotors which are preferably two concentrically mounted support rings 52, 54 provided with holding apertures (not shown) for receiving and carrying cuvettes C (delivered preferably first to ring 52 by any pusher means 43, Fig. 2), rotating means for independently rotating rings 52 and 54 about a common axis 55, transfer means (not shown) for moving a cuvette, arrow 56 of Fig. 2, from ring 52 to 54, and then off ring 54, processing stations around the rings, and heating means to incubate the contents of the cuvettes on rings 52 and 54. Rings 52 and 54 are shown only schematically in Fig. 2 in association with the related components. Rotating means for the rings preferably comprise gear teeth 62, 64 disposed on each of rings 52 and 54, respectively, to be driven by pinion gears 66 and 68.

As noted above, various processing stations are disposed around the circumference of rings 52 and 54, in addition to an entrance port 70 for cuvettes C. They are as follows, Figs. 1 and 2: Station 72 is permanently disposed above ring 52 and is the place to which the dispensing tip 37 of aspirator 20, Fig. 1, pivots and descends to dispense sample into a cuvette in ring 52, Fig. 2. First reagent addition station 74 is permanently disposed at least above ring 52 so that the permanent tip of aspirator 22 can dispense at least a first reagent into a cuvette in ring 52. Optionally, aspirator 22 can also be used to dispense a second regent, namely a conjugate reagent, as well. A further reagent addition station 76, here for signal reagent, is disposed permanently above at least inner ring 54, to descend to dispense signal reagent into a cuvette in ring 54. Wash dispensing station 78 is disposed permanently above ring 54 for washing cuvettes using wash dispenser 30. Luminometer 32 is permanently disposed above ring 54 for reading chemiluminescence.

Final removal of the used, finished cuvette from ring 54 can be achieved by any suitable mechanism.

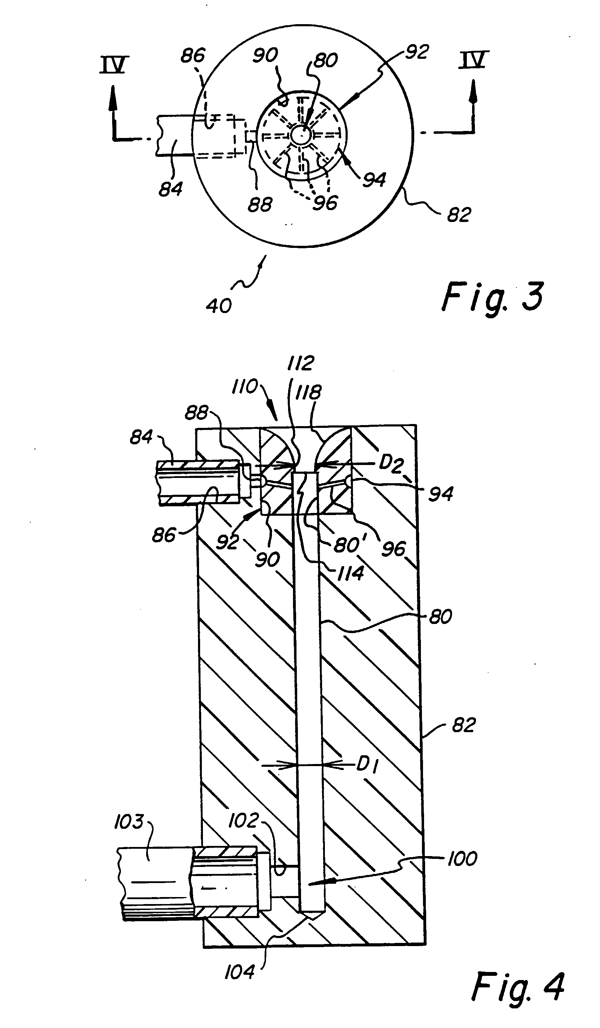

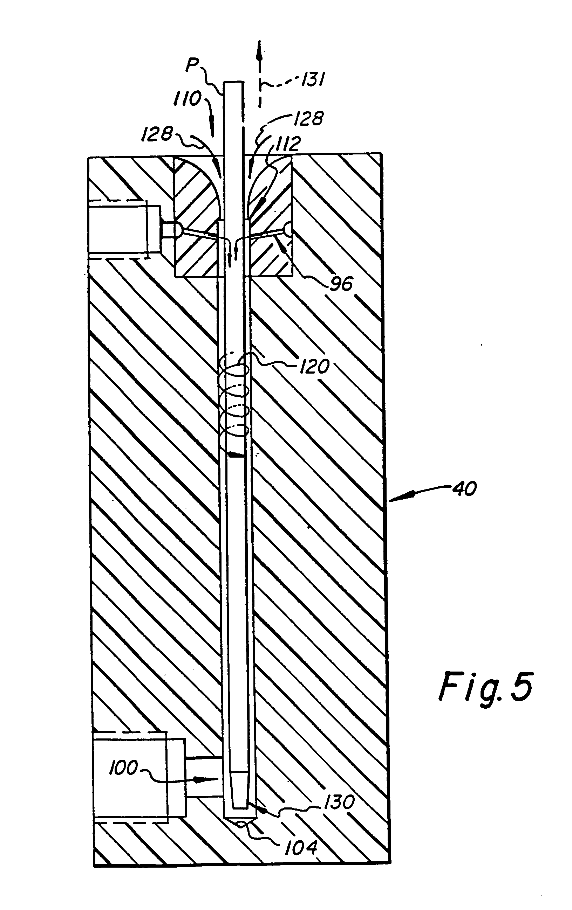

With respect to the probe wash device 40 in particular, first, as is conventional, Figs. 3-4, device 40 comprises a wash compartment which, as shown, comprises a generally straight cylinder 80 vertically disposed within frame 82 and extending between opposite ends 104 and 110. End 110 is open to the atmosphere for access by a probe, and has an entrance diameter D₀, Fig. 3. For most of its length, it has a predetermined inside diameter D₁, Fig. 4, which can be, for example, 3.5 mm, depending on the outside diameter of probe P, Fig. 5. Most preferably, the wash compartment comprises one continuous chamber, with portion 80' described below being part of this continuous chamber since the alignment of the walls of 80' with the walls of 80 is preferably substantially continuous and unbroken. Such a construction provides for uniform flow of wash liquid and air.

A source of wash fluid, for example, a pipe or tube 84, Figs. 3-4, is joined to frame 82 at an aperture 86, which aperture fluidly connects via a reduced aperture 88 to an enlarged opening 90 disposed above compartment 80, into which is fixed or formed a member 92 machined or otherwise shaped to have a continuation 80' of compartment 80, that is, an axial bore of the same diameter D₁ that aligns with compartment 80, Fig. 4; an annular groove 94 aligned to fluidly connect with aperture 88; and jet apertures 96 feeding into compartment 80' at a first location, the jets being described in more detail hereinafter.

At a location 100 adjacent but spaced from end 104, and below the location of jets 96, an exhaust opening 102 extends from the compartment. An exhaust such as a conventional vacuum source (not shown) is connected to opening 102 via pipe or tubing 103. Most preferably, location 100 is disposed slightly above bottom surface 104 of compartment 80, leaving a soak volume for wash fluid to collect and wash, an inserted probe.

In accordance with the invention, probe wash device 40 is improved in several respects, Fig. 4. In one, opening 110 of member 92 is provided with a constricted passageway 112 inside and below opening 110, and adjacent to and just above, jets 96. That is, inside diameter D₂ of opening 110 is slightly less than D₁, and terminates in an abrupt shoulder 114. Such a constricted passageway preferably encircles the entire circumference of the wash compartment 80'. For example, D₂ can be 2.9 mm if D₁ is 3.5 mm, which is still large enough, however, Fig. 5, to receive a probe P during washing, spaced from the wall of opening 110. The relationship of diameter D₂ to D₁ or D₀ is not critical, except that D₀ must be larger that D₂.

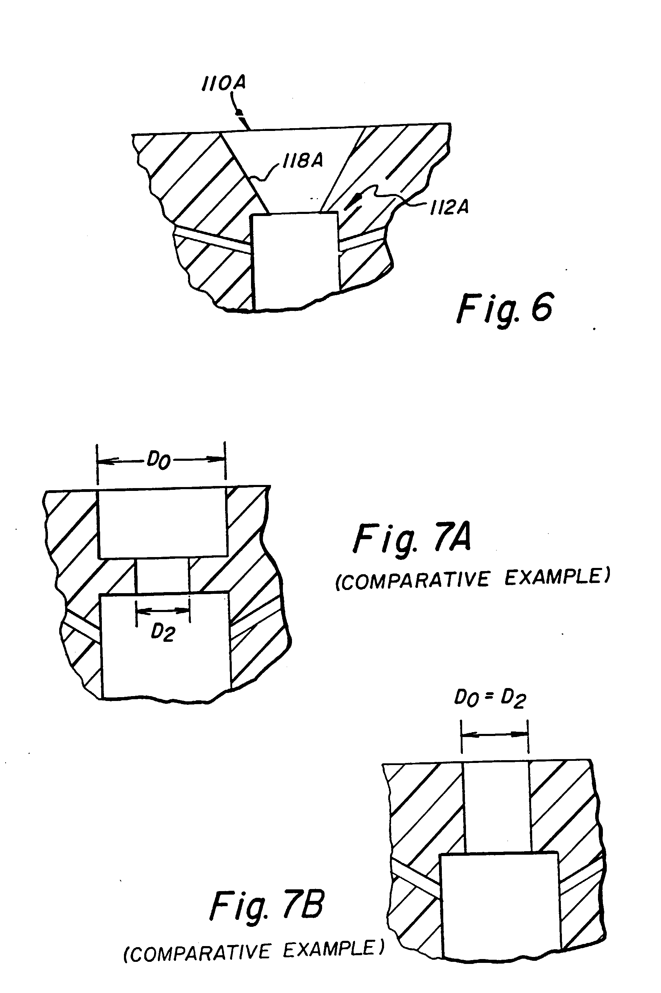

Importantly, wall surface 118 that connects passageway 112 to upper end 110 is a continuous surface that smoothly connects end 110 and the shoulder 114. Such a surface, lacking interior or exterior corners, causes air to flow in end 110 and past shoulder 114 at greatly increased velocities. Although wall surface 118 is shown to be gradually curved and with a convex cross-sectional shape, other smooth transit surfaces can be used, for example, a cone surface 118A, Fig. 6, connecting end 110A and passageway 112A. What is not acceptable is either of the constructions shown in Figs. 7A and 7B. These do not appreciably increase the air flow velocity.

Below shoulder 114, Fig. 4, for example, at portion 80', the diameter D₁ is larger that diameter D₂, and especially at the location of jets 96. The reason is that the sudden increase in diameter D₁ causes a pressure drop that allows the jetted wash liquid to strike any probe present, unlike what would occur without the pressure drop.

A further improvement of device 40 includes the construction of jets 96. These are provided as a plurality of separate apertures, as shown, Fig. 3, all radiating inward from groove 94 to compartment 80'. Such separate apertures cause the wash fluid to be delivered as separate jets. It is believed this entrains air in the wash water as the fluid flows into compartment 80' and 80. This entrained air is thought to help scour the exterior of a probe being washed, arrow 120, Fig. 5.

Still further, jets 96 are aimed generally downward, that is, toward exhaust location 100 rather than perpendicularly out into compartment 80'. This in turn aids in forcing wash fluid to flow downwardly, arrow 120.

When in use, Fig. 5, a probe P is inserted as shown, with its end 130 being spaced from surface 104. Wash fluid is injected via jets 96 and washes downwardly, arrow 120, the probe exterior surface. The exhaust at location 100 is effective to remove the spent wash fluid during and after this action. Optionally, at the same time a wash fluid can be injected internally, and downwardly, probe P (not shown) to be removed also out the exhaust.

Following the actual washing, the exhaust aperture 102 continues to exhaust the contents of compartment 80, thus forcing in drying air at opening 110, arrows 128. Because of the constricted passageway 112, the air flow is speeded up at this location, providing a more effective removal of residual liquid as probe P is raised vertically, arrow 131.

The invention disclosed herein may be practiced in the absence of any element which is not specifically disclosed herein.

## Claims

1. A device used in an analyzer to wash a probe having an outside diameter, the device having a wash compartment of a predetermined inner diameter, a source of wash fluid that is fluidly connected thereto, and two opposite ends, one of the ends having a probe access opening of a selected entrance diameter, and an exhaust adjacent the other end for removing liquid and air from the wash compartment,
characterized in that the compartment includes at a location adjacent to the one end, a constricted passageway of a diameter that is less than the probe access entrance diameter and the predetermined inner diameter, but that is greater than the outside diameter of a probe washed in the device, and a wall surface smoothly connecting the probe access entrance diameter with the constricted passageway diameter so that air is speeded up when flowing into the one end and past the constricted passageway to aid in drying a probe that is being withdrawn from the device.

2. A device as defined in claim 1, wherein the source of wash fluid is connected via a plurality of separate apertures opening into the compartment, at a portion of the compartment having the predetermined inner diameter.

3. A device as defined in claim 2, wherein the apertures are aimed toward the other end and the exhaust, so that wash fluid is encouraged to flow toward the exhaust.

4. A device as defined in any one of claims 1 to 3, wherein the wall surface is gradually curved.

5. A device as defined in any one of claims 1 to 4, wherein the wash compartment extends generally vertically.
